# EUROPEAN PATENT APPLICATION

(11) **EP 4 516 382 A1**
(43) Date of publication of application: **05.03.2025**
(21) Application number: 22940368.8
(22) Date of filing: 01.07.2022
(51) Int. Cl.: B01D 53/14, B01D 53/78, B01D 53/79, B01D 47/06, C02F 1/66, C01D 7/00, B04B 5/10

(54) **CARBON DIOXIDE CAPTURE, CARBON RESOURCE UTILIZATION, AND HYDROGEN PRODUCTION SYSTEM FOR STEEL MILL**

(30) Priority: 27.04.2022 KR 20220051953
(71) Applicant: Lowcarbon Co., Ltd., Seongjeon-myeon, Gangjin-gun Jeollanam-do 59205 (KR)
(72) Inventor: LEE, Cheol, Cheongju-si Chungcheongbuk-do 28709 (KR)
(74) Representative: M. Zardi & Co S.A.
(86) International application number: PCT/KR2022/009524
(87) International publication number: WO 2023/210874

(57) **Abstract**

A carbon dioxide capture, carbon resource utilization, and hydrogen production system for a steel mill of the present invention comprises: a reactor which is provided between a reduction furnace and a blast furnace to spray a basic alkali mixture solution from a reduction gas, a flue gas of the reduction furnace, to remove carbon dioxide and produce a reaction product, and then blows the carbon dioxide-removed flue gas into the blast furnace; and a hydrogen generator which generates hydrogen gas and oxygen gas, by using a carbon dioxide reaction product, from the reaction product generated from the reactor, and supplies the generated hydrogen gas as fuel to the blast furnace and supplies the generated oxygen gas to a melter-gasifier, wherein the reactor separates the carbon dioxide reaction product and a waste solution from the reaction product and stores the separated carbon dioxide reaction product for resource utilization thereof.

## Description

### Technical Field

The present disclosure relates to a carbon dioxide capture, carbon resource utilization, and hydrogen production system for a steel mill. More particularly, the present disclosure relates to a carbon dioxide capture, carbon resource utilization, and hydrogen production system for a steel mill, the system being configured such that carbon dioxide in a flue gas generated from a steel mill is captured and converted into a carbon resource by using a basic alkali mixture solution and also hydrogen gas is generated, thereby being capable of removing carbon dioxide from the deleterious flue gas discharged from the steel mill and also being capable of converting carbon dioxide into other useful materials.

### Background Art

The steel industry is an industry in which carbon dioxide emissions are bound to be high due to the nature of using fossil fuel as the main raw material, and accounts for 7% to 9% of carbon dioxide emitted from fossil fuel.

According to the World Steel Association, an average of 1.83 tons of carbon dioxide is emitted while one ton of steel is produced, and the steel industry accounts for the largest proportion of carbon dioxide emissions from all industries at 24%.

Recently, all-out efforts are being made around the world to accelerate the transition to a deoxygenated society and, accordingly, the steel industry is also conducting research and development on Carbon Capture and Utilization (CCU) technology.

Meanwhile, a conventional steel manufacturing process is performed in the order of an iron manufacturing process, a steel manufacturing process, a continuous casting process, and a rolling process. Particularly, since a large amount of carbon is used as a reduction agent an iron manufacturing furnace producing pig iron by reducing iron ore, the iron manufacturing process is directly related to the generation of carbon dioxide. As a result, it was found that carbon dioxide generated in the iron manufacturing process accounts for 80% of the amount of carbon dioxide generated in the entire steel mill.

In addition, in the conventional iron manufacturing process, a blast furnace method in which iron ore that has undergone a sintering process and coke manufactured using bituminous coal as a raw material are injected into a blast furnace and then oxygen is blown into the blast furnace to manufacture molten iron is used. According to the blast furnace method, auxiliary facilities such as a coke manufacturing facility for manufacturing bituminous coal into coke, a sintering facility for performing the sintering process of iron ore, and so on are required to be provided.

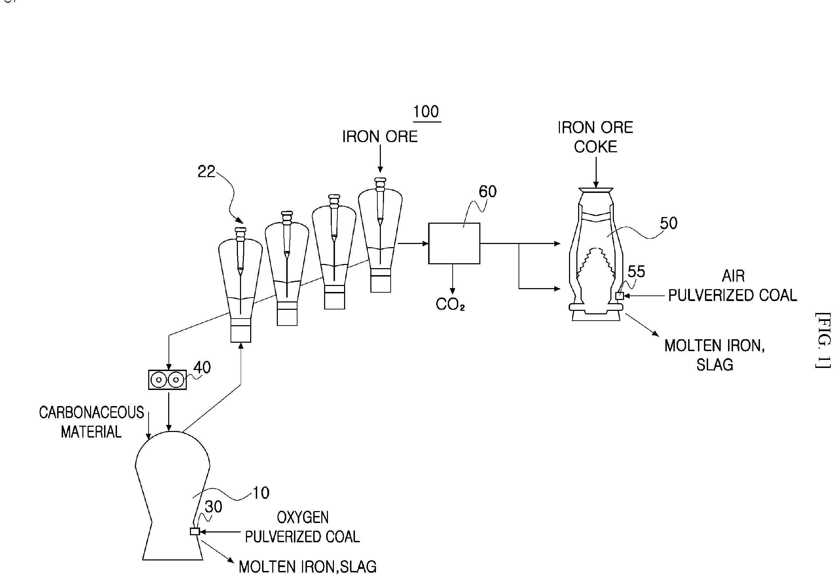

FIG. 1 is a schematic view illustrating a conventional molten iron manufacturing apparatus in an iron manufacturing process using a blast furnace.

Referring to FIG. 1, the conventional molten iron manufacturing apparatus 100 includes a melter-gasifier 10, a reduction furnace 22, a blast furnace 50, and a carbon dioxide removing apparatus 60, and iron ore is charged in the reduction furnace 20 and then is reduced.

At this time, after iron ore is pre-dried, reduced iron is manufactured from the iron ore while the iron ore passes through the reduction furnace 22. The reduction furnace 22 is a fluidized bed reduction furnace, and a fluidized bed is formed inside the reduction furnace 22 by receiving a reduction gas from fine iron ore and the melter-gasifier 10. The reduction furnace 22 may be formed in a multi-stage manner for the reduction efficiency, and the maximum temperature of the reduction furnace 22 is less than 1000 degrees Celsius, and the pre-reduction rate is about 60% to 80%.

In addition, iron ore or fine iron ore may be charged in the reduction furnace 22. When fine iron ore is charged in the reduction furnace 22, a reduced iron molding apparatus 40 is mounted between the reduction furnace 22 and the melter-gasifier 10. The reduced iron molding apparatus 40 is configured to mold iron ore in a power shape discharged from the reduction furnace 20 into iron ore in a lumped shape, and the iron ore in the lumped shape is provided to the melter-gasifier 10.

At this time, iron ore and lumped carbonaceous materials are charged in the melter-gasifier 10 and the melter-gasifier 10 manufactures molten iron, and lumped carbonaceous materials charged in the melter-gasifier 10 is moved to a lower portion of the melter-gasifier 10 and then is thermally reacted with oxygen supplied through a tuyere 30.

In order to reduce CO₂ generated in the existing molten iron manufacturing process as described above, coal using efficiency is required to be increased. Therefore, it is important to reuse a flue gas generated in the process or to use a hydrogen-containing gas that replaces coal.

However, in the blast furnace process in which molten pig iron is manufactured by using air, there is a difficulty in reusing a flue gas due to nitrogen. Furthermore, in a process of manufacturing molten pig iron after pre-reduction is performed on a fluidized bed or a fixed bed not on the blast furnace, there is a disadvantage that the efficiency of using energy in the process is relatively lower than that of the blast furnace process since CO and H₂ in a flue gas are relatively higher than that of the blast furnace process.

Therefore, there is an urgent need for a method for efficiently capturing carbon dioxide discharged from a steel mill in a simpler manner than that of a conventional technology and, at the same time, for extracting oxygen and hydrogen in a flue gas gases and reusing oxygen and hydrogen as fuel to replace coal.

In addition, as a carbon dioxide capture technology has recently been developed, carbon dioxide capture products have been generated, but technology for utilizing or storing generated carbon dioxide capture products has not yet been developed, so that technology development is required accordingly.

### Disclosure

### Technical Problem

Accordingly, the present disclosure has been made keeping in mind the above problems occurring in the related art, and an objective of the present disclosure is to provide a system capable of reducing carbon dioxide in a flue gas generated during an iron manufacturing process in a steel mill and also capable of reusing oxygen gas and hydrogen gas in the flue gas.

In addition, another objective of the present disclosure is to provide a carbon dioxide capture, carbon resource utilization, and hydrogen production system for a steel mill, the system being configured to use a basic alkali mixture solution such that carbon dioxide in a flue gas is captured and converted into a carbon resource so that carbon dioxide is removed and also carbon dioxide is utilized into other useful materials.

In addition, still another objective of the present disclosure is to provide a carbon dioxide capture, carbon resource utilization, and hydrogen production system for a steel mill, the system being capable of capturing carbon dioxide in a flue gas generated during an iron manufacturing process in a steel mill and converting carbon dioxide into a carbon dioxide and then storing and transporting the carbon resource.

The technical problems to be solved by the present disclosure are not limited to the above-mentioned problems, and other problems which are not mentioned will be clearly understood by those skilled in the art from the following description.

### Technical Solution

In order to achieve the above objectives, according to an aspect of the present disclosure, there is provided a carbon dioxide capture, carbon resource utilization, and hydrogen production system for a steel mill, the system including: a melter-gasifier configured to manufacture molten iron by charging reduced iron and lumped carbonaceous materials therein; a reduction furnace connected to the melter-gasifier, the reduction furnace being configured to manufacture reduced iron from iron ore by using a reduction gas discharged from the melter-gasifier and being configured to provide the reduced iron to the melter-gasifier; a blast furnace configured to manufacture molten iron by charging iron ore and coke therein; a reactor provided between the reduction furnace and the blast furnace, the reactor being configured to spray a basic alkali mixture solution so that carbon dioxide is removed from a reduction gas that is a flue gas from the reduction furnace and a reaction product is generated, and the reactor being configured to blow the flue gas in which carbon dioxide is removed to the blast furnace; and a hydrogen generator configured to generate hydrogen gas and oxygen gas by using a carbon dioxide reaction product in the reaction product generated from the reactor, wherein the reactor is configured to separate the carbon dioxide reaction product and a waste solution from the reaction product, and is configured to store the separated carbon dioxide reaction product for resource utilization thereof.

In addition, according to an aspect, hydrogen gas generated in the hydrogen generator may be supplied as fuel to the blast furnace or may be stored in a hydrogen storage tank, and the generated oxygen gas may be supplied to the melter-gasifier.

In addition, according to an aspect, the basic alkali mixture solution may include: at least one oxide selected from a group consisting of SiO₂, Al₂O₃, Fe₂O₃, TiO₂, MgO, MnO, CaO, Na₂O, K₂O, and P₂O₃; at least one metal selected from a group consisting of Li, Cr, Co, Ni, Cu, Zn, Ga, Sr, Cd, and Pb; a crystallized synthetic zeolite manufactured from an alumina-based material, a silica-based material, and sodium hydroxide; and at least one liquid compound selected from a group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

In addition, according to an aspect, the reactor may include: a mixer configured to supply the basic alkali mixture solution; an absorption column configured to capture carbon dioxide in the flue gas by reacting the basic alkali mixture solution supplied from the mixer with the flue gas in which micro bubbles are formed by passing through a bubbler formed on a lower portion of the absorption column; a separator configured to collect the reaction product containing carbon dioxide captured in the absorption column and configured to separate the carbon dioxide reaction product and the waste solution from the reaction product; and a carbon resource storage configured to store the separated carbon dioxide reaction product for resource utilization thereof.

In addition, according to an aspect, the mixer may be configured to generate the basic alkali mixture solution by mixing a basic alkaline solution supplied from a basic alkaline solution storage with water supplied from a water source.

In addition, according to an aspect, the basic alkaline solution and water may be mixed in a ratio of 1:1 to 1:5.

In addition, according to an aspect, an average pH of the basic alkali mixture solution may be pH 12 to pH 13.5.

In addition, according to an aspect, the basic alkali mixture solution may be input by being adjusted through a valve in the mixer when a level of the basic alkali mixture solution in the absorption column is lowered to less than 90%, and inputting of the basic alkali mixture solution may be stopped and, at the same time, a basic alkaline solution and water may be mixed until a pH of the basic alkali mixture solution becomes pH 12 to pH 13.5 when the level of the basic alkali mixture solution becomes 100%.

In addition, according to an aspect, the absorption column may be configured to supply the basic alkali mixture solution from the mixer by using a plurality of nozzles mounted on an upper portion of the absorption column.

In addition, according to an aspect, the bubbler may be configured to form flue gas micro bubbles by using the flue gas.

In addition, according to an aspect, in the absorption column, carbon dioxide transferred from the reduction furnace may be atomized into micro bubbles by passing through a mesh net mounted on the lower portion of the absorption column, the basic alkali mixture solution supplied inside the absorption column from the mixer through a pipe may be sprayed upwardly as a fountain shape through a plurality of nozzles which is mounted on a first side of the pipe and which is disposed to be spaced apart from each other at a predetermined distance and then the basic alkali mixture solution may be atomized into micro droplets, and carbon dioxide may be captured as the basic alkali mixture solution that is atomized reacts with carbon dioxide that is atomized, the pipe being mounted such that the pipe crosses an upper portion of the absorption column.

In addition, according to an aspect, an agitator for promoting a reaction between carbon dioxide and the basic alkali mixture solution by increasing fluidity of the atomized carbon dioxide and the atomized basic alkali mixture solution may be further provided between the mesh net and the pipe.

In addition, according to an aspect, a micro droplet screen for allowing micro droplets in the atomized basic alkali mixture solution having a size smaller than a predetermined size to pass therethrough may be further provided between the mesh net and the pipe.

In addition, according to an aspect, the carbon dioxide reaction product may include sodium carbonate (Na₂CO₃) or sodium bicarbonate (NaHCO₃).

In addition, according to an aspect, the separator may include: a centrifuge configured to separate the waste solution and the carbon dioxide reaction product containing sodium carbonate (Na₂CO₃) or sodium bicarbonate (NaHCO₃) from the reaction product; and a vibration separation membrane formed corresponding to an inner circumference of a discharge pipe for discharging only sodium bicarbonate in the carbon dioxide reaction product, the vibration separation membrane having a surface provided with fine holes formed in a size capable of allowing carbon bicarbonate to pass therethrough.

In addition, according to an aspect, the reactor may further include: a monitoring part configured to monitor a level and a pH of the basic alkali mixture solution in the absorption column; and a controller configured to adjust a supply amount of the basic alkali mixture solution by the monitoring part.

### Advantageous Effects

According to embodiments of the present disclosure, the following effects may be realized. However, the embodiments may not include all these effects, and a claim scope of the present disclosure is not construed as being limited thereto.

According to an embodiment of the present disclosure, carbon dioxide may be reduced by capturing carbon dioxide in a flue gas discharged during a conventional iron manufacturing process, and sodium carbonate or sodium bicarbonate, which is a useful resource, may be manufactured by using the captured carbon dioxide.

In addition, according to an embodiment of the present disclosure, oxygen gas and hydrogen gas in a flue gas generated in a conventional iron manufacturing process may be extracted and reused as fuel of a blast furnace, thereby being capable of increasing the efficiency of coal utilization for reducing carbon dioxide.

In addition, according to an embodiment of the present disclosure, carbon dioxide in a conventional iron manufacturing process may be captured by using a basic alkali mixture solution, and the captured carbon dioxide reaction product may be utilized in various industrial fields such as food additives, detergents, soap raw materials, high-tech medical industries, wastewater treatment, and so on, so that profit generation is capable of being realized and economic feasibility compared to that of the conventional technology is capable of being secured.

### Description of Drawings

FIG. 1 is a schematic view illustrating a conventional molten iron manufacturing apparatus in an iron manufacturing process using a blast furnace.
FIG. 2 is a view illustrating a configuration of a carbon dioxide capture, carbon resource utilization, and hydrogen production system for a steel mill according to an embodiment of the present disclosure.
FIG. 3 is a view illustrating a molten iron manufacturing apparatus according to an embodiment of the present disclosure.
FIG. 4 is a view illustrating a reactor according to an embodiment of the present disclosure.
FIG. 5 is a conceptual view illustrating a hydrogen generator according to an embodiment of the present disclosure.
FIG. 6 is an enlarged view illustrating the B part illustrated in FIG. 5.
FIG. 7 is an enlarged view illustrating part the A part illustrated in FIG. 5.
FIG. 8 is a view schematically illustrating an internal configuration of an absorption column for improving carbon dioxide capture performance of the reactor according to another embodiment of the present disclosure.

### Mode for Invention

Since the present disclosure may be variously modified and have several exemplary embodiments, specific exemplary embodiments will be shown in the accompanying drawings and be described in detail in a detailed description.

However, it should be understood that the specific embodiments according to the concept of the present disclosure are not limited to the embodiments which will be described hereinbelow with reference to the accompanying drawings, but all of modifications, equivalents, and substitutions are included in the scope and spirit of the present disclosure.

It is to be understood that terms such as "including", "having", and so on are intended to indicate the existence of the features, numbers, steps, actions, elements, components, or combinations thereof disclosed in the specification, and are not intended to preclude the possibility that one or more other features, numbers, steps, actions, elements, components, or combinations thereof may exist or may be added.

Hereinafter, a carbon dioxide capture, carbon resource utilization, and hydrogen production system for a steel mill according to an embodiment of the present disclosure will be described in more detail with reference to the following drawings.

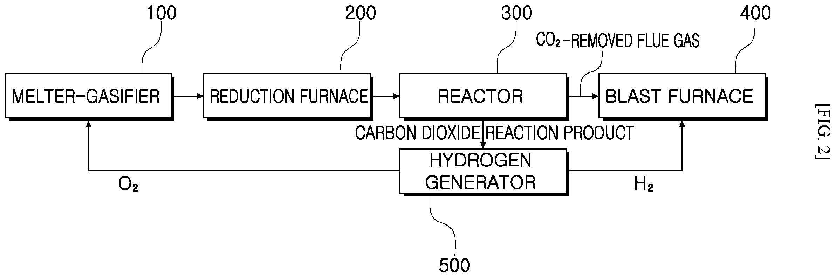

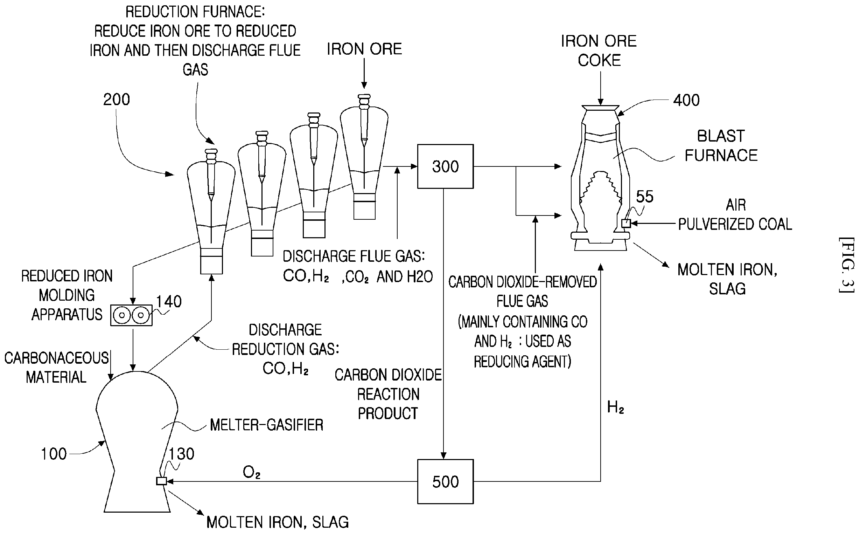

FIG. 2 is a view illustrating a configuration of a carbon dioxide capture, carbon resource utilization, and hydrogen production system for a steel mill according to an embodiment of the present disclosure, and FIG. 3 is a view illustrating a molten iron manufacturing apparatus according to an embodiment of the present disclosure.

First, referring to FIG. 2, the carbon dioxide capture, carbon resource utilization, and hydrogen production system for the steel mill according to an embodiment of the present disclosure is provided with a melter-gasifier 100 configured to manufacture molten iron by charging reduced iron and lumped carbonaceous materials therein.

In addition, the carbon dioxide capture, carbon resource utilization, and hydrogen production system for the steel mill according to an embodiment of the present disclosure is provided with a reduction furnace 200 connected to the melter-gasifier 100, the reduction furnace 200 being configured to manufacture reduced iron from iron ore by using a reduction gas discharged from the melter-gasifier 100 and being configured to provide the reduced iron to the melter-gasifier 100.

In addition, the carbon dioxide capture, carbon resource utilization, and hydrogen production system for the steel mill according to an embodiment of the present disclosure is provided with a blast furnace 400 configured to manufacture molten iron by charging iron ore and coke therein. At this time, a reactor 300 configured to reduce carbon dioxide in a flue gas from the reduction furnace 200 and to generate a carbon dioxide reaction product and then to blow the carbon dioxide-removed flue gas to the blast furnace 400 is provided between the reduction furnace 200 and the blast furnace 400.

In addition, the carbon dioxide capture, carbon resource utilization, and hydrogen production system for the steel mill according to an embodiment of the present disclosure is provided with a hydrogen generator 500 configured to generate hydrogen gas and oxygen gas by using the carbon dioxide reaction product generated from the reactor 300, the hydrogen generator 500 being configured to supply the generated hydrogen gas as fuel to the blast furnace 400 and also to supply the generated oxygen gas to the melter-gasifier 100.

Specifically, referring to FIG. 3, the reactor 300 may capture carbon dioxide in a flue gas by receiving a reduction gas from the reduction furnace 200 and reacting the reduction gas with a basic alkali mixture solution, may collect a reaction product containing the captured carbon dioxide, may separate a carbon dioxide reaction product and a waste solution from the reaction product, may collect and store the carbon dioxide reaction product, and may finally discharge a residual flue gas in which the captured carbon dioxide is removed to the outside.

Here, the carbon dioxide reaction product includes sodium carbonate (Na₂CO₃) or sodium bicarbonate (NaHCO₃), and the residual flue gas is a reduction gas which is input to the blast furnace 400 and in which carbon dioxide is removed.

Therefore, in a molten iron manufacturing process according to an embodiment of the present disclosure, iron ore is charged into the reduction furnace 200 and is reduced. At this time, iron ore charged into the reduction furnace 200 is pre-dried and then is passing through the reduction furnace 200, so that reduced iron is manufactured.

At this time, the reduction furnace 200 may be a fluidized bed reduction furnace, and a fluidized bed is formed inside the reduction furnace 200 by receiving a reduction gas from a fine iron ore and the melter-gasifier 100.

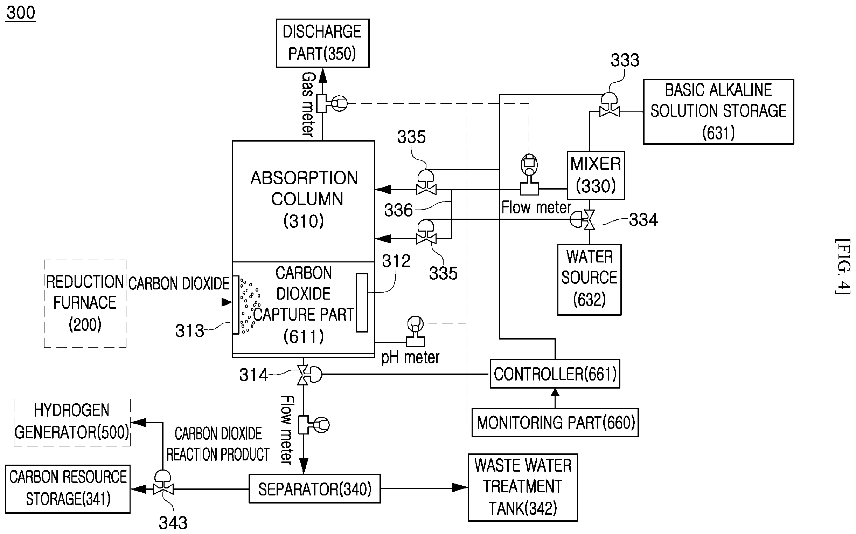

In addition, the reactor 300 reduces the content of carbon dioxide in the flue gas supplied from the reduction furnace 200, i.e., the content of carbon dioxide in the reduction gas, and transmits the reduction gas in which carbon dioxide is reduced to the blast furnace 400. The configuration of the reactor 300 will be discussed in more detail in FIG. 4 which will be described later.

FIG. 4 is a view illustrating the reactor 300 according to an embodiment of the present disclosure.

Referring to FIG. 4, the reactor 300 according to an embodiment of the present disclosure has a structure capable of reducing carbon dioxide by capturing carbon dioxide in the flue gas, i.e., the reduction gas, discharged during an iron manufacturing process that is one process of a steel manufacturing process, and capable of performing carbon resource utilization by converting the captured carbon dioxide into sodium carbonate or sodium bicarbonate.

Specifically, the reactor 300 according to an embodiment of the present disclosure is a reactor configured to capture carbon dioxide in the flue gas, i.e., the reduction gas, discharged from the reduction furnace 200 by using a basic alkali mixture solution. Furthermore, the reactor 300 includes an absorption column 310, a carbon dioxide capture part 311, a mixer 330, a separator 340, a carbon resource storage 341, and a discharge part 350.

The absorption column 310 may refer to a facility, a building, equipment, and so on configured to capture carbon dioxide. In addition, the carbon dioxide capture part 311 positioned on a lower end of the absorption column 310 is a portion of the absorption column 310, and may refer to a portion where carbon dioxide is captured by bubbling a flue gas.

The absorption column 310 includes the carbon dioxide capture part 311 at the lower end of the absorption column 310 where carbon dioxide is captured, and is configured to capture only carbon dioxide in the flue gas by reacting the basic alkali mixture solution with the flue gas (micro bubbles of the flue gas) discharged during the iron manufacturing process in the steel mill. After carbon dioxide in the flue gas is captured, the flue gas in which carbon dioxide is removed may remain in a gaseous state in the absorption column 310.

A nozzle is mounted on an upper portion of the absorption column 310, the basic alkali mixture solution is sprayed inside the absorption column 310 through the nozzle from the mixer 330, and the basic alkali mixture solution is collected in the carbon dioxide capture part 311 positioned at the lower end of the absorption column 310. At the same time as the basic alkali mixture solution is sprayed, the flue gas supplied from reduction furnace 200 passes through a bubbler 313 in the carbon dioxide capture part 311 at the lower portion of the absorption column 310, the flue gas in which micro bubbles are formed is supplied, and the basic alkali mixture solution and the micro bubbles of the flue gas react with each other within the carbon dioxide capture part 311, so that carbon dioxide is captured. When the flue gas reacts with the basic alkali mixture solution, the micro bubbles are formed while the flue gas passes through the bubbler 313 having fine holes formed on an outlet of the reduction furnace 200.

As the flue gas supplied from the reduction furnace 200 passes through the bubbler 313, the bubbler 113 may form the micro bubbles in the flue gas. Furthermore, the smaller the size of the micro bubbles, the larger the reaction area of the flue gas and the alkaline solution, so that the carbon dioxide capture ability may be increased. For example, the micro bubbles may refer to bubbles which have a size about equal to or less than 50 µm and which exist in an aqueous solution.

In addition, in addition to the bubbler 313, a baffle 508 having a plurality of slits or holes such that the flue gas is introduced with a uniform speed distribution may further be added in the absorption column.

In addition, the absorption column 310 may include a level indicator 312 inside the absorption column 310, so that a level of a solution in the absorption column 410 is capable of being detected.

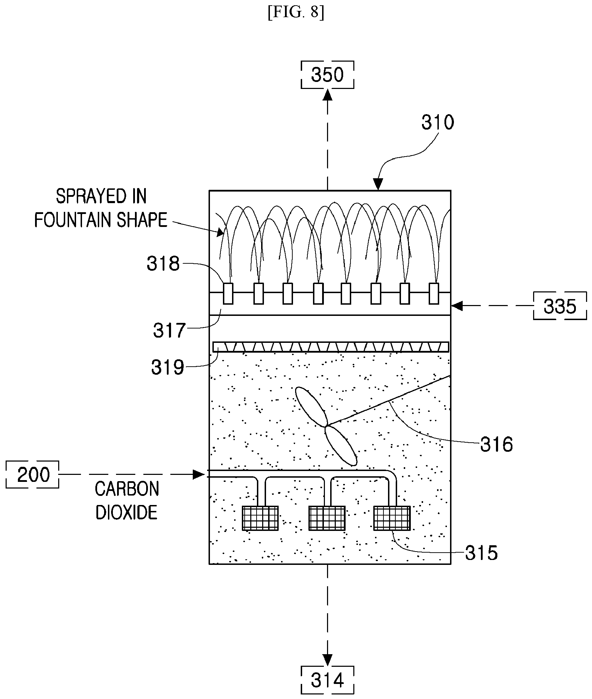

The nozzle (see reference numeral 318 in FIG. 8) may include a plurality of nozzles, and may be formed of at least one stage. The nozzle (see reference numeral 318 in FIG. 8) is connected to the mixer 330, and may supply a basic alkali mixture solution from the mixer 330.

The absorption columns 310 may be configured in series, in parallel, or in a series and parallel complex arrangement.

For example, the absorption columns 310 may be arranged in series when the flow velocity of the flue gas is high. When carbon dioxide unreacted due to a high flow velocity is discharged from the absorption columns, the absorption columns may be mounted in series so as to capture the unreacted carbon dioxide.

In addition, for example, the absorption column 310 may be arranged in parallel when the flow rate of the flue gas is large. When the flow rate of the flue gas exceeds the amount that the absorption column can capture, the amount of carbon dioxide that can be captured may be increased by arranging the absorption column in parallel.

The reactor 300 may utilize all flue gases including carbon dioxide. According to an embodiment of the present disclosure, a reduction gas or other gases generated in the reduction furnace 200 in the iron manufacturing process of the steel mill may be included in all flue gases.

The mixer 330 mixes a basic alkaline solution supplied from a basic alkaline solution storage 331 with water supplied from a water source 332, and supplies the mixture to the nozzle (see reference numeral 318 in FIG. 8) of the absorption column 310.

A basic alkali mixture solution in which the basic alkaline solution and water are mixed with each other may be supplied by using a separately connected bypass line 336 when a supply amount or a required amount of the basic alkali mixture solution is increased.

The basic alkaline solution and water may be mixed in a ratio of 1:1 to 1:5. For example, the basic alkaline solution and water may be mixed in a ratio of 1:1 to 1:4, 1:1 to 1:3, 1:1 to 1:2, 1:2 to 1:5, 1:2 to 1:3, or 1:3 to 1:5.

A carbon dioxide capture rate may be increased as the basic alkali mixture solution mixing ratio of the basic alkaline solution and water is increased, but the mixing ratio of water may be adjusted in consideration of the cost aspect.

The basic alkali mixture solution may include: at least one oxide selected from a group consisting of SiO₂, Al₂O₃, Fe₂O₃, TiO₂, MgO, MnO, CaO, Na₂O, K₂O, and P₂O₃; at least one metal selected from a group consisting of Li, Cr, Co, Ni, Cu, Zn, Ga, Sr, Cd, and Pb; a crystallized synthetic zeolite manufactured from an alumina-based material, a silica-based material, and sodium hydroxide; and at least one liquid compound selected from a group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

The water source 332 may include all water that may be easily acquired at a system installation site, and water may be seawater as an example.

An average pH of the basic alkali mixture solution may be at least pH 12. For example, the pH may be pH 12 to pH 13.5, pH 13, pH 12, pH 12.1, pH 12.2, or pH 12.3. The pH of the basic alkali mixture solution may be measured by a pH meter in the absorption column 310, and carbon dioxide cannot be captured anymore when the pH of the basic alkali mixture solution in the absorption column 310 is less than pH 10.5. Therefore, in order to adjust the pH of the basic alkali mixture solution, the basic alkaline solution and water may be supplied to the mixer 330 by adjusting the amount of the basic alkaline solution and the amount of water from zero to 100% by each valve 333 and 334.

When the level of the basic alkali mixture solution in the absorption column 310 is lower than 90% (measured by the level indicator), the input of the basic alkali mixture solution may be adjusted through a valve 335 at the mixer 330 so that the basic alkali mixture solution is input. Furthermore, when the level of the solution reaches 100%, the input of the basic alkali mixture solution may be stopped. At the same time, the basic alkaline solution and water may be mixed until the pH of the basic alkali mixture solution becomes pH 12 to pH 13.5.

Since the amount of basic alkali mixture solution supplied to the absorption column 310 and the amount of a solution discharged from the separator 340 are the same, a carbon dioxide capture system is capable of being continuously maintained. Therefore, the valve 335 (including a bypass valve if necessary) may be adjusted such that the same amount of the basic alkali mixture solution as a value of a flow meter mounted in a line from the absorption column 310 to the separator 340 is supplied to the absorption column 310 so that the net flow is adjusted to zero.

A reaction product containing carbon dioxide captured by reacting the basic alkali mixture solution and the flue gas discharged from the reduction furnace 200 with each other is collected in the carbon dioxide capture part 311 of the absorption column 310, a carbon dioxide reaction product and a waste solution from the reaction product are moved to the separator 340 through a valve 314, and the carbon dioxide reaction product and the waste solution are separated from the reaction product.

The separator 340 may include a centrifuge configured to separate the waste solution and the carbon dioxide reaction product containing sodium carbonate (Na₂CO₃) or sodium bicarbonate (NaHCO₃) from the reaction product, and may include a vibration separation membrane formed corresponding to a size of an inner circumference of a discharge pipe for discharging only sodium bicarbonate in the carbon dioxide reaction product separated from the centrifuge, the vibration separation membrane having a surface provided with fine holes such that carbon bicarbonate is capable of passing therethrough. Through this, a high purity sodium bicarbonate can be acquired and can be sold immediately, so that a profit may be realized.

The size of the fine holes formed in the vibration separation membrane may be 10 µm to 20 µm, and the vibration separation membrane may further include a vibration generation part so as to induce vibration in the vibration separation membrane. The vibration generation part may be disposed so as to prevent the fine holes from being blocked by sodium bicarbonate.

The separated carbon dioxide reaction product may be moved to the carbon resource storage 341, and may be recycled so as to be utilized for other purposes. For example, the carbon dioxide reaction product may include sodium carbonate (Na₂CO₃) or sodium bicarbonate (NaHCO₃).

As described in Formula 1 below, the carbon dioxide reaction product may be formed by reacting the basic alkali mixture solution with carbon dioxide.

<Formula 1> 2NaOH + CO₂ → Na₂CO₃ + H₂O Na₂CO₃ + H₂O + CO₂ → 2NaHCO₃

In the reaction product, a waste solution other than a carbon dioxide reaction product is moved to a wastewater treatment tank 342 and then is discarded. For example, the waste solution may contain illite minerals, water, and so on that are contained in the basic alkali mixture solution that has finished a catalyst function.

The carbon resource storage 341 is a carbon dioxide reaction product storage considering that the steel mill is located on the beach for raw material procurement. Furthermore, the carbon resource storage 141 may store a carbon resource, which is a carbon dioxide capture reaction product, more efficiently than a conventional carbon dioxide storage apparatus, while reducing the storage cost and the accommodation cost.

Specifically, the carbon resource storage 341 may include: an offshore structure accommodating a carbon dioxide reaction product generated by reacting a basic alkali mixture solution with carbon dioxide generated in a steel mill; an inlet unit configured to load the carbon dioxide reaction product to the offshore structure; a discharge unit connected to the offshore structure and configured to unload the carbon dioxide reaction product from the offshore structure; and a control unit configured to control the inlet unit and the discharge unit during loading/unloading of the carbon dioxide reaction product accommodated in the offshore structure. Through this, the carbon resource may be more efficiently stored in the offshore structure, and the carbon resource may be withdrawn from the offshore structure and may be utilized when the stored carbon resource is required.

Preferably, the offshore structure is a floating offshore structure including a liquid transport carrier ship, but is not limited thereto, and may include any structure capable of performing various tasks such as floating or moving in the sea. Specifically, any one of an LNG FPSO, an LNG FSRU, an LNG transport ship, and an LNG RV may be selected as the offshore structure.

Meanwhile, the residual flue gas in which carbon dioxide is removed after carbon dioxide is captured in the carbon dioxide capture part 311 is discharged through the discharge part 350. According to an embodiment of the present disclosure, the residual flue gas discharged through the discharge part 350 is a reduction gas in which carbon dioxide is removed and is input to the blast furnace 400.

In addition, since the concentration of carbon dioxide cannot exceed the regulatory standard value when the residual flue gas is discharged, the residual flue gas that does not exceed a standard (the standard set by a manager after the concentration of carbon dioxide in the atmosphere is measured) may be discharged on the basis of the concentration of carbon dioxide in the atmosphere to which the residual flue gas is discharged.

The reactor 300 may further include: a monitoring part 360 configured to monitor a level and a pH of the basic alkali mixture solution in the absorption column 310; and a controller 361 configured to adjust a supply amount of the basic alkali mixture solution by the monitoring part 360.

Values of a gas meter, a pH meter, and a flow meter measured in all processes in the reactor 300 are managed in the monitoring part 360, and the controller 361 performs adjustment on the basis of the values represented in the monitoring part 360. The valves 314, 333, 334, and 335 may be adjusted in terms of percentage with respect to values input from the controller 361.

In the carbon dioxide capture, carbon resource utilization, and hydrogen production system for the steel mill according to the present disclosure, carbon dioxide may be reduced by capturing carbon dioxide in the flue gas generated during the iron manufacturing process in the steel mill, and the captured carbon dioxide may be utilized into other useful materials by converting the captured carbon dioxide into sodium carbonate or sodium bicarbonate.

Meanwhile, a valve 343 is further provided between the carbon resource storage 341 and the separator 340, and the carbon dioxide reaction product generated from the absorption column 310 may be selectively transmitted to the carbon resource storage 341 or to the hydrogen generator 500 by a flow path switching operation and an opening and closing operation of the valve 343.

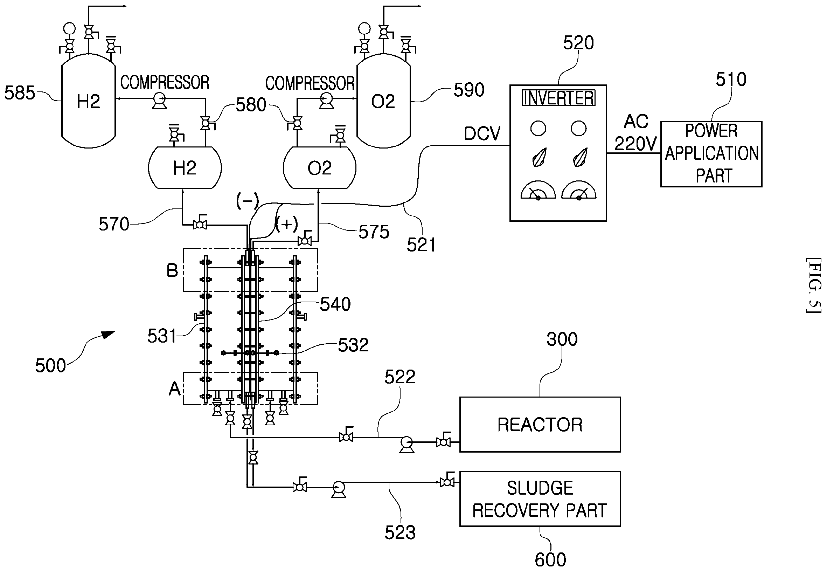

Hydrogen gas and oxygen gas are extracted through electrolysis from the carbon dioxide reaction product sent to the hydrogen generator. Detailed description of the hydrogen generator will be described in detail with reference to FIG. 5 to FIG. 7 which will be described later.

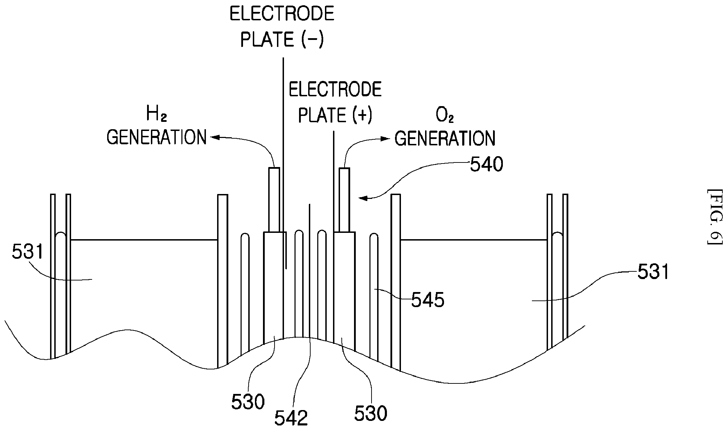

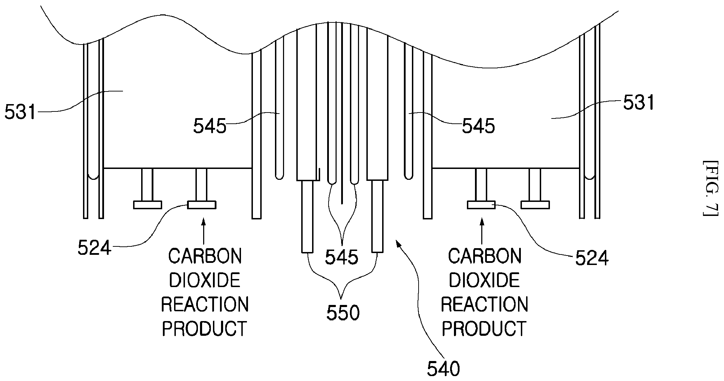

FIG. 5 is a conceptual view illustrating the hydrogen generator 500 according to an embodiment of the present disclosure, FIG. 6 is an enlarged view illustrating the B part illustrated in FIG. 5, and FIG. 7 is an enlarged view illustrating the A part illustrated in FIG. 5.

As illustrated in FIG. 5 to FIG. 7, the hydrogen generator 500 may include: a carbon dioxide reaction product supply tank 531 for supplying sodium carbonate (Na₂CO₃) or sodium bicarbonate (NaHCO₃), each being a carbon dioxide reaction product separated from the reactor 300; a water electrolysis cell 540 configured to generate hydrogen gas and oxygen gas through electrolysis by using sodium carbonate (Na₂CO₃) or sodium bicarbonate (NaHCO₃) supplied from the carbon dioxide reaction product supply tank 531 as an electrolyte for the electrolysis; and a power application part 510 and an inverter 520 for applying a current to the water electrolysis cell 540.

The carbon dioxide reaction product supply tank 531 receives sodium carbonate (Na₂CO₃) or sodium bicarbonate (NaHCO₃) through a carbon dioxide reaction product inlet flow path 522 and stores sodium carbonate (Na₂CO₃) or sodium bicarbonate (NaHCO₃) as an electrolyte, sodium carbonate (Na₂CO₃) or sodium bicarbonate (NaHCO₃) being the carbon dioxide reaction product separated from the reactor 300. Furthermore, the carbon dioxide reaction product supply tank 531 may be provided with a carbon dioxide reaction product inlet port 524 connected to an electrolyte supply flow path 532 configured to supply the carbon dioxide reaction product stored in the carbon dioxide reaction product supply tank 431 to the water electrolysis cell 540.

In the carbon dioxide reaction product supply tank 531 may be provided with a pump for pumping sodium carbonate (Na₂CO₃) or sodium bicarbonate (NaHCO₃) being an electrolyte for the electrolysis performed by the hydrogen generator 500.

As illustrated in FIG. 6 and FIG. 7, the water electrolysis cell 540 may include: a negative electrode (-) plate and a positive electrode (+) plate; a diaphragm 542 that is an electrolyte membrane disposed between the negative electrode plate and the positive electrode plate; a pair of electrolyzers 530 which accommodates the carbon dioxide reaction product supplied from the carbon dioxide reaction product supply tank 531 and which is connected to a hydrogen storage tank 585 and an oxygen storage tank 590; a gas discharge part configured to discharge hydrogen gas and oxygen gas that are generated by electrolyzing the carbon dioxide reaction product in the electrolyzers 530; and a drain 550 for discharging an ion material that has not been reacted by electrolysis.

Preferably, in order to prevent the carbon dioxide reaction product stored in the carbon dioxide reaction product supply tank 531 from being in contact with the electrode plates, a packing 545 formed as a non-conductor and a control part (not illustrated) capable of selectively controlling whether the carbon dioxide reaction product inlet flow path 522 is opened or closed by using power of the power application part 510 may further be provided.

As in the following Formula 2, in a state in which the electrode plates at both sides are supplied with sodium carbonate (Na₂CO₃) or sodium bicarbonate (NaHCO₃) being the electrolyte in the present disclosure, the water electrolysis cell 540 generates hydrogen gas (H₂) and oxygen gas (O₂) as power is applied to the water electrolysis cell 540 by the power application part 510 and the inverter 520 through a DC busbar 521.
<Formula 2>

Reduction electrode (negative electrode) reaction: Na₂CO₃+ CO₂+ 2H₂O + 2e⁻ → 2NaOH+ 2CO₂+ 2OH⁻ + H₂ 2NaHCO₃ + 2e⁻ → 2NaOH+ 2CO₂+ 2OH⁻ + H₂

Oxidation electrode (positive electrode) reaction: Na₂CO₃ + CO₂ + H₂O - 2e⁻ → 2NaOH + 2CO₂ + 2H⁺ + O₂ 2NaHCO₃ - 2e- → 2NaOH + 2CO₂ + 2H⁺ + O₂

That is, at this time, sodium carbonate (Na₂CO₃) or sodium bicarbonate (NaHCO₃), which is an electrolyte supplied to the water electrolysis cell 540, dissociates on a surface of the negative electrode plate and discharges hydrogen gas, and oxygen gas is discharged on the positive electrode plate as oxygen ions move through the diaphragm that is the electrolyte membrane. Here, the ion material that has not been reacted in Formula 2 may be transferred to a sludge recovery part 600 of the hydrogen generator 500 through the drain 550.

Through the process described above, hydrogen gas discharged from the water electrolysis cell 540 is discharged through a hydrogen discharge flow path 570 and passes through a filter and a compressor, so that high purity hydrogen gas is stored in the hydrogen storage tank 585. Furthermore, the stored hydrogen gas is supplied as fuel to replace coal to the blast furnace 400, thereby being capable of increasing the power generation efficiency and also being capable of reducing the generation of greenhouse gas.

Similarly, oxygen gas discharged from the water electrolysis cell 540 is discharged through an oxygen discharge flow path 575 and passes through a filter and a compressor, so that high purity oxygen gas may be stored in the oxygen storage tank 590. The oxygen gas stored in the oxygen storage tank 590 may be supplied to a tuyere (see reference 130 in FIG. 3) of the melter-gasifier 100, so that the oxygen gas stored in the oxygen storage tank 590 may be used for generating a reduction gas.

Meanwhile, in a cathode of a conventional water electrolysis technology that uses water as an electrolyte, OH- radicals are generated as a reaction product during a reduction process, and water (H₂O) is generated since OH- radicals easily recombine with oxygen (O₂) generated through oxidation at an anode and hydrogen (H₂) generated through reduction at the cathode, so that there is a problem the hydrogen (H₂) generation efficiency is reduced as a result.

However, in the present disclosure, sodium carbonate(Na₂CO₃) or sodium bicarbonate (NaHCO₃), which is a carbon dioxide reaction product, is used as an electrolyte for electrolysis. Therefore, the recombination of the dissociated OH-radicals with hydrogen (H₂) and oxygen (O₂) in the conventional water electrolysis technology is prevented by sodium carbonate(Na₂CO₃) or sodium bicarbonate (NaHCO₃) being a carbon dioxide reaction product, so that the hydrogen (H₂) generation efficiency may be increased as a result. In addition, in the present disclosure, since Na⁺ ions are dissociated through a water electrolysis reaction, the hydrogen (H₂) gas generation amount may be increased due to an increase in electrical conductivity, so that there is an effect that a problem of the conventional technology is capable of being solved.

FIG. 8 is a view schematically illustrating an internal configuration of the absorption column 310 for improving carbon dioxide capture performance of the reactor according to another embodiment of the present disclosure.

Referring to FIG. 8, in the configuration of the absorption column of the reactor according to another embodiment of the present disclosure, in addition to the configuration according to an embodiment illustrated in FIG. 4, a detailed configuration for promoting a reaction between carbon dioxide and the basic alkali mixture solution may be added.

In the absorption column 310 according to another embodiment, carbon dioxide transferred from the reduction furnace 200 passes through a mesh net 315 mounted on the lower portion of the absorption column 310, and is atomized into micro bubbles.

In addition, the basic alkali mixture solution supplied to the inside of the absorption column 310 from the mixer (see reference numeral 330 in FIG. 4) through a pipe 317 is sprayed upwardly as a fountain shape through the plurality of nozzles 318 mounted on a first side of the pipe 317 by being spaced apart from each other at a predetermined distance, and then the basic alkali mixture solution is atomized into micro droplets, the pipe 317 being mounted such that the pipe 317 crosses the upper portion of the absorption column 310.

In addition, a micro droplet screen 319 may be further provided between the mesh net 315 and the pipe 317 so as to allow micro droplets in the atomized basic alkali mixture solution having a size smaller than a predetermined size to pass therethrough.

As previously described in an embodiment in FIG. 4, micro bubbles and micro droplets generated by the mesh net 315 and the micro droplet screen 319 may increase a reaction surface area between carbon dioxide and the alkaline solution as the size of the micro bubbles and micro droplets decrease, thereby being capable of increasing the carbon dioxide capture performance. For example, the micro bubbles and the micro droplets may have a size of about 50 µm or less.

Then, as described above, the basic alkali mixture solution atomized into the micro droplets actively captures carbon dioxide as the reaction is promoted through contact with the atomized carbon dioxide which has been atomized by the mesh net 315.

In addition, an agitator 316 for promoting the reaction by increasing fluidity of the atomized carbon dioxide and the atomized basic alkali mixture solution may further be provided between the mesh 315 and the pipe 317.

The agitator 316 may further promote a reaction between the two materials by increasing the retention time and the contact time of the atomized basic alkali mixture solution and the atomized carbon dioxide by being rotated in the manner of a propeller.

Although embodiments of the present disclosure have been described for illustrative purposes, those skilled in the art will appreciate that various modifications, additions and substitutions are possible, without changing the spirit or essential features of the present disclosure. Therefore, it should be understood that the embodiments described above are illustrative in all respects and not restrictive. The scope of the present specification is characterized by the appended claims rather than the detailed description described above, and it should be construed that all alterations or modifications derived from the meaning and scope of the appended claims and the equivalents thereof fall within the scope of the present specification.

Meanwhile, the exemplary embodiments of the present specification are disclosed in the present specification and the drawings, and specific terms are used, but the specific terms are used as general meanings merely for easily explaining the technical contents of the present specification and helping understand the present disclosure, but not intended to limit the scope of the present specification. It is obvious to those skilled in the art to which the present specification pertains that other modified embodiments may be carried out on the basis of the technical spirit of the present specification in addition to the exemplary embodiments disclosed herein.

### Industrial Applicability

The present disclosure may be widely used in the fields of carbon dioxide capture, carbon resource utilization, and hydrogen production system for a steel mill.

## Claims

1. A carbon dioxide capture, carbon resource utilization, and hydrogen production system for a steel mill, the system comprising:
a melter-gasifier configured to manufacture molten iron by charging reduced iron and lumped carbonaceous materials therein;
a reduction furnace connected to the melter-gasifier, the reduction furnace being configured to manufacture reduced iron from iron ore by using a reduction gas discharged from the melter-gasifier and being configured to provide the reduced iron to the melter-gasifier;
a blast furnace configured to manufacture molten iron by charging iron ore and coke therein;
a reactor provided between the reduction furnace and the blast furnace, the reactor being configured to spray a basic alkali mixture solution so that carbon dioxide is removed from a reduction gas that is a flue gas from the reduction furnace and a reaction product is generated, and the reactor being configured to blow the flue gas in which carbon dioxide is removed to the blast furnace; and
a hydrogen generator configured to generate hydrogen gas and oxygen gas by using a carbon dioxide reaction product in the reaction product generated from the reactor,
wherein the reactor is configured to separate the carbon dioxide reaction product and a waste solution from the reaction product, and is configured to store the separated carbon dioxide reaction product for resource utilization thereof.

2. The system of claim 1, wherein hydrogen gas generated in the hydrogen generator is supplied as fuel to the blast furnace or is stored in a hydrogen storage tank, and the generated oxygen gas is supplied to the melter-gasifier.

3. The system of claim 1, wherein the basic alkali mixture solution comprises:
at least one oxide selected from a group consisting of SiO₂, Al₂O₃, Fe₂O₃, TiO₂, MgO, MnO, CaO, Na₂O, K₂O, and P₂O₃;
at least one metal selected from a group consisting of Li, Cr, Co, Ni, Cu, Zn, Ga, Sr, Cd, and Pb;
a crystallized synthetic zeolite manufactured from an alumina-based material, a silica-based material, and sodium hydroxide; and
at least one liquid compound selected from a group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

4. The system of claim 1, wherein the reactor comprises:
a mixer configured to supply the basic alkali mixture solution;
an absorption column configured to capture carbon dioxide in the flue gas by reacting the basic alkali mixture solution supplied from the mixer with the flue gas in which micro bubbles are formed by passing through a bubbler formed on a lower portion of the absorption column;
a separator configured to collect the reaction product containing carbon dioxide captured in the absorption column and configured to separate the carbon dioxide reaction product and the waste solution from the reaction product; and
a carbon resource storage configured to store the separated carbon dioxide reaction product for resource utilization thereof.

5. The system of claim 4, wherein the mixer is configured to generate the basic alkali mixture solution by mixing a basic alkaline solution supplied from a basic alkaline solution storage with water supplied from a water source.

6. The system of claim 5, wherein the basic alkaline solution and water are mixed in a ratio of 1:1 to 1:5.

7. The system of claim 3, wherein an average pH of the basic alkali mixture solution is pH 12 to pH 13.5.

8. The system of claim 4, wherein the basic alkali mixture solution is input by being adjusted through a valve in the mixer when a level of the basic alkali mixture solution in the absorption column is lowered to less than 90%, and inputting of the basic alkali mixture solution is stopped and, at the same time, a basic alkaline solution and water are mixed until a pH of the basic alkali mixture solution becomes pH 12 to pH 13.5 when the level of the basic alkali mixture solution becomes 100%.

9. The system of claim 4, wherein the absorption column is configured to supply the basic alkali mixture solution from the mixer by using a plurality of nozzles mounted on an upper portion of the absorption column.

10. The system of claim 4, wherein the bubbler is configured to form flue gas micro bubbles by using the flue gas.

11. The system of claim 4, wherein, in the absorption column, carbon dioxide transferred from the reduction furnace is atomized into micro bubbles by passing through a mesh net mounted on the lower portion of the absorption column, the basic alkali mixture solution supplied inside the absorption column from the mixer through a pipe is sprayed upwardly as a fountain shape through a plurality of nozzles which is mounted on a first side of the pipe and which is disposed to be spaced apart from each other at a predetermined distance and then the basic alkali mixture solution is atomized into micro droplets, and carbon dioxide is captured as the basic alkali mixture solution that is atomized reacts with carbon dioxide that is atomized, the pipe being mounted such that the pipe crosses an upper portion of the absorption column.

12. The system of claim 11, wherein an agitator for promoting a reaction between carbon dioxide and the basic alkali mixture solution by increasing fluidity of the atomized carbon dioxide and the atomized basic alkali mixture solution is further provided between the mesh net and the pipe.

13. The system of claim 11, wherein a micro droplet screen for allowing micro droplets in the atomized basic alkali mixture solution having a size smaller than a predetermined size to pass therethrough is further provided between the mesh net and the pipe.

14. The system of claim 1, wherein the carbon dioxide reaction product comprises sodium carbonate (Na₂CO₃) or sodium bicarbonate (NaHCO₃).

15. The system of claim 4, wherein the separator comprises:
a centrifuge configured to separate the waste solution and the carbon dioxide reaction product containing sodium carbonate (Na₂CO₃) or sodium bicarbonate (NaHCO₃) from the reaction product; and
a vibration separation membrane formed corresponding to an inner circumference of a discharge pipe for discharging only sodium bicarbonate in the carbon dioxide reaction product, the vibration separation membrane having a surface provided with fine holes formed in a size capable of allowing carbon bicarbonate to pass therethrough.

16. The system of claim 4, wherein the reactor further comprises:
a monitoring part configured to monitor a level and a pH of the basic alkali mixture solution in the absorption column; and
a controller configured to adjust a supply amount of the basic alkali mixture solution by the monitoring part.
